Europäisches Patentamt

European Patent Office

Office européen des brevets

(19)

(11) **EP 1 028 568 A1**

(12) **DEMANDE DE BREVET EUROPEEN**

(43) Date de publication:
**16.08.2000 Bulletin 2000/33**

(51) Int Cl.⁷: $H04L\ 29/06$

(21) Numéro de dépôt: **00400300.0**

(22) Date de dépôt: **03.02.2000**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **08.02.1999 FR 9901449**

(71) Demandeur: **BULL S.A.**
**78434 Louveciennes Cedex (FR)**

(72) Inventeurs:
• **Courteaux, Brigitte**
**92500 Rueil Malmaison (FR)**
• **Calvez, Pierre**
**92500 Rueil Malmaison (FR)**
• **Pincibono, Florent**
**78160 Marly le Roy (FR)**
• **Rondeau, Thierry**
**75006 Paris (FR)**
• **Valvot, Max**
**78220 Viroflay (FR)**

(54) **Dispositif et procédé d'authentification d'un utilisateur à distance**

(57) La présente invention concerne un procédé d'authentification à distance d'un utilisateur (7) pour l'accès local à une machine (4), appartenant à un réseau (5) incluant un serveur (3) géré par un administrateur (8), consistant à :

• créer au moyen de la machine (4) un défi (D) ;
• communiquer à l'administrateur (8) le défi (D) ainsi que des éléments connus de l'utilisateur à l'aide des moyens de communication (9) indépendant du réseau (5) ;
• effectuer un calcul prédéterminé au moyen du serveur (3) pour obtenir une réponse (RD) au défi (D);
• transmettre à l'utilisateur (7) la réponse obtenue (RD) par les moyens de communication (9) ;
• effectuer un calcul à l'aide de la machine (4) de la même façon que le serveur (3) pour obtenir une réponse (RD1) au défi (D) ;
• comparer les réponses (RD) et (RD1) et autoriser la connexion en local en fonction du résultat.

FIG.1

EP 1 028 568 A1

## Description

La présente invention concerne le domaine des systèmes sécurisés d'authentification à distance permettant le contrôle d'accès en local d'un utilisateur à une station.

## L'art antérieur

Dans un environnement distribué, on connaît des systèmes de gestion d'accès sécurisés permettant un contrôle d'accès sécurisé à distance à travers un réseau, d'utilisateurs à des ressources protégées.

Dans le cadre de la présente invention, le terme « ressource » doit être entendu dans son sens le plus large. Il englobe notamment des applications logicielles, des bases de données ou des fichiers, des champs particuliers de ces fichiers, des systèmes complets, des machines, des dispositifs particuliers tels que des périphériques ...

Les systèmes de gestion d'accès sécurisés garantissent l'identification des utilisateurs afin de déterminer si ceux-ci font parties des personnes habilitées à utiliser les ressources concernées. Un système de gestion d'accès sécurisés comporte généralement une base de données centralisée dans laquelle sont stockées des informations concernant les utilisateurs, leurs moyens d'authentification, les opérations autorisées... Les moyens d'authentification peuvent consister par exemple en mot de passe, carte à microprocesseur, mot de passe à usage unique...

Un administrateur gère la base de données centrale de manière homogène et sur l'ensemble du système d'information. Chaque utilisateur est authentifié par un serveur central d'authentification ayant accès à la base de données centrale.

Les systèmes de gestion d'accès sécurisés à distance posent un problème lorsqu'un des éléments participant à l'authentification ne fonctionne plus. Ainsi, par exemple, en cas d'indisponibilité ou de panne du serveur, en cas de panne au niveau du réseau, en cas de problème logiciel ou matériel empêchant d'accéder au réseau, en cas de problème dans le logiciel d'authentification lui-même ou dans sa configuration, ou dans d'autres cas équivalents, il devient impossible pour toutes personnes, en particulier pour celles chargées de la maintenance, de s'authentifier et donc de se connecter, même en local. L'agent chargé de la maintenance est contraint de détruire le système d'informations par exemple en le réinstallant entièrement.

On connaît une solution consistant à utiliser un cache local de sécurité généré lors de la première authentification de l'utilisateur. Le cache local contient tous les éléments permettant l'authentification de l'utilisateur localement. Le cache est réutilisable par la suite par l'utilisateur en question. Cette solution présente l'inconvénient pour les agents de la maintenance d'avoir à s'authentifier une première fois sur toute les stations sur lesquelles ils sont susceptibles d'intervenir, ceci afin de créer un cache leur étant destiné sur chacune desdites stations. Par ailleurs, si une panne quelconque se produit avant qu'un utilisateur n'ait eu le temps de se connecter à sa station, ledit utilisateur ne pourra pas se connecter en l'absence de cache local de sécurité.

Un but de la présente invention est d'authentifier un utilisateur en local sur une station en évitant une authentification à distance réalisée par un serveur à travers un réseau, le serveur centralisant toutes les données relatives aux autorisations d'accès telles que nom d'utilisateur, mot de passe,...

Un but de la présente invention est de permettre la connexion à une station en local lorsque le serveur d'authentification, le réseau ou autre est en panne ou indisponible.

## Résumé de l'invention

Dans ce contexte, la présente invention propose un procédé d'authentification à distance d'un utilisateur pour accéder localement à une machine locale appartenant à un réseau, le réseau incluant un serveur distant géré par un administrateur, le serveur contenant des moyens de classement d'informations, caractérisé en ce qu'il consiste à :

- créer un défi D apte à être transmis par des moyens de communication, les moyens de communication mettant l'utilisateur en relation avec l'administrateur ;
- communiquer à l'administrateur le défi créé D ainsi que des éléments connus de l'utilisateur à l'aide des moyens de communication ;
- effectuer un calcul prédéterminé au moyen du serveur pour obtenir une réponse RD fonction du défi D et/ou de données déterminées;
- transmettre à l'utilisateur la réponse obtenue RD par les moyens de communication ;
- effectuer un calcul à l'aide de la machine locale de la même façon que le serveur pour obtenir une réponse RD1 fonction du défi D et/ou de données déterminées ;
- comparer la réponse RD transmise par l'administrateur et la réponse RD1 calculée par la machine locale et autoriser la connexion de l'utilisateur à la machine en local en fonction du résultat de la comparaison.

La présente invention propose également un système d'authentification à distance d'un utilisateur pour l'accès local à une machine appelée machine locale, appartenant à un réseau incluant un serveur distant géré par un administrateur, le serveur contenant des moyens de classement d'informations, caractérisé en ce qu'il comprend des moyens de communication mettant l'utilisateur en relation avec l'administrateur, en ce que chaque machine locale comprend un module d'authentification utilisateur comportant un module utilisateur de génération de défi et un module utilisateur de calcul de réponse à un défi, et en ce que le serveur comprend un module d'authentification administrateur comportant un module administrateur de calcul de réponse à un défi.

**Présentation des figures**

D'autres caractéristiques et avantages de l'invention apparaîtront à la lumière de la description qui suit, donnée à titre d'exemple illustratif et non limitatif de la présente invention, en référence aux dessins annexés dans lesquels:

- la figure 1 est un schéma simplifié global du système d'authentification selon la présente invention ;
- les figures 2, 4 à 6 représentent l'écran d'une machine locale du système informatique selon une forme de réalisation de la présente invention ;
- la figure 3 représente l'écran d'un serveur du système informatique selon une forme de réalisation de la présente invention.

**Description d'une forme de réalisation de l'invention**

Dans toute la description qui suit, le terme « local » définit une proximité par rapport au référentiel constitué par un utilisateur du système selon l'invention, le terme « distant » un éloignement.

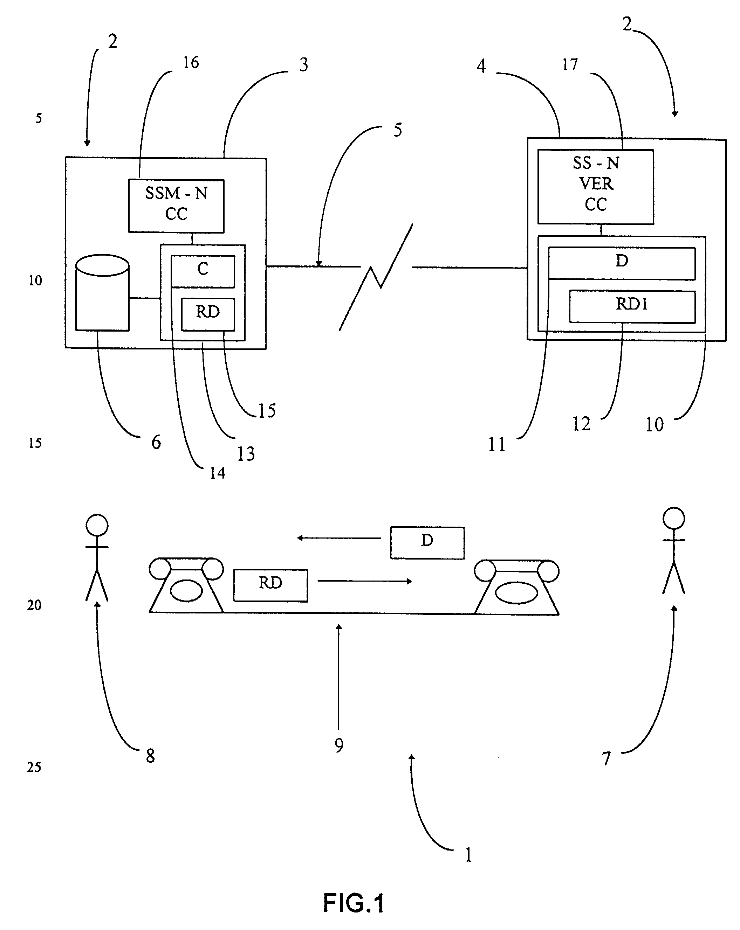

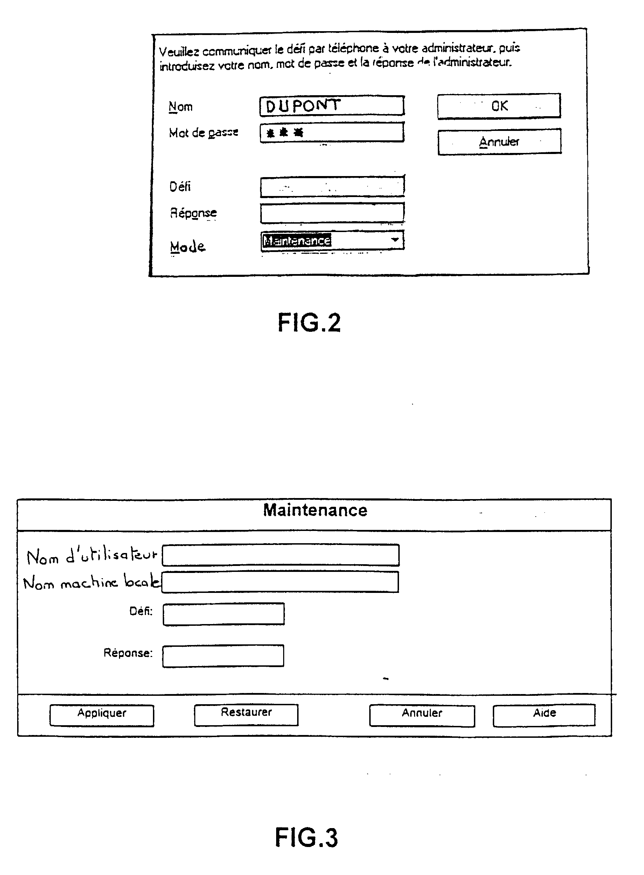

Comme représenté sur la figure 1, la présente invention concerne un système informatique 1 comportant au moins deux machines 2 avec leurs composants essentiels classiques, processeur, unité centrale, entrée/sortie, ... L'une des sorties des machines 2 se matérialise par un écran sur lequel s'affichent des boîtes de dialogue représentées sur les figures 2 à 6. L'une des machines 2 joue un rôle spécifique par rapport aux autres et est appelée serveur distant 3, les autres machines étant appelées machines locales 4.

Le serveur distant 3 est relié aux machines locales 4 par l'intermédiaire d'un réseau 5. Le serveur 3 comporte une base de données centrale 6 dans laquelle sont stockées des informations concernant des utilisateurs 7 du système 1. Lesdites informations peuvent consister notamment pour chaque utilisateur 7 en un nom d'utilisateur et un mot de passe. Un administrateur 8 gère la base de données centrale 6.

Le système 1 comprend des moyens de communication 9 entre chaque utilisateur 7 et l'administrateur 8. Selon une forme de réalisation, les moyens de communication 9 relient de manière directe et/ou sécurisée un utilisateur 7 à un administrateur 8. Selon un développement de l'invention particulièrement avantageux notamment lorsque le réseau 5 est en panne ou indisponible, les moyens de communication 9 fonctionnent hors ligne à savoir sans connexion au réseau 5.

Les moyens de communication peuvent consister comme illustré sur la figure 1 en une ligne téléphonique. Tout autre moyen de communication comme par exemple un télex, une ligne radio, une connexion informatique est susceptible d'être utilisé.

Des modules logiciels d'authentification utilisateur 10 sont prévus dans chaque machine locale 4. Ils comprennent un module utilisateur de génération de défi 11 et un module utilisateur de calcul de réponse à un défi 12. Un module logiciel d'authentification administrateur 13 est prévu dans le serveur 3. Il comprend un module administrateur de modification de secret 14 et un module administrateur de calcul de réponse à un défi 15. Les relations entre modules sont susceptibles de se présenter sous toute autre forme; ainsi, par exemple, le module administrateur de modification de secret 14 peut ne pas être contenu dans le module d'authentification administrateur 13.

Des interfaces graphiques sont prévues dans chacune des machines 2 pour le dialogue avec un utilisateur ou administrateur. Elles affichent notamment des boîtes de dialogue (représentées sur les figures 2 à 6) sur l'écran des machines 2. Les boîtes de dialogue servent à la saisie d'éléments communiqués par l'utilisateur ou l'administrateur ainsi qu'à l'affichage d'informations destinées à ces derniers.

Le serveur distant 3 et chaque machine locale 4 comportent également respectivement des moyens de mémorisation administrateur 16 et utilisateur 17. Les informations contenues dans les moyens de mémorisation administrateur 16 sont susceptibles d'être contenues dans la base de données centrale 6. Dans ce dernier cas, les moyens de mémorisation administrateur 16 sont supprimés.

Comme le montre la figure 1, l'utilisateur 7 dispose d'une machine locale 4 sur laquelle il souhaite se connecter. L'utilisateur 7 saisit sur la machine locale 4 un nom d'utilisateur et un mot de passe à l'aide d'une boîte de dialogue adaptée et choisit un des modes de connexion qui lui sont offerts. Dans la forme de réalisation décrite, plusieurs modes de connexion s'offrent à l'utilisateur. Le mode dit normal consiste en la connexion de l'utilisateur 7 au serveur distant 3 au travers du réseau 5. Le mode dit de maintenance consiste en la connexion en local de l'utilisateur 7 sur la machine locale 4 après autorisation à distance de l'administrateur 8.

L'utilisateur 7 choisit le mode normal. Le module d'authentification utilisateur 10 communique la demande d'autorisation d'accès de l'utilisateur, le nom d'utilisateur et le mot de passe au module d'authentification administrateur 13 par le réseau 5. Le module d'authentification administrateur 13 vérifie dans la base de données centrale 6 la présence du nom d'utilisateur et du mot de passe associé. Si le nom d'utilisateur ou le mot de passe associé ne se trouvent pas dans la base de données 6, l'accès est refusé. Si le nom d'utilisateur et le mot de passe associé se trouvent dans la base de données 6, le module d'authentification administrateur 13 transmet son autorisation au module d'authentification utilisateur 10. La connexion de l'utilisateur 7 à la machine locale 4 et au réseau 5 est réalisée. L'authentification telle que décrite précédemment en mode normal est appelé authentification réseau.

Les moyens de mémorisation administrateur 16 contiennent un secret appelé Secret Station Maître SSM. Le Secret Station Maître SSM est par exemple constitué d'une chaîne d'octets ; le Secret Station Maître SSM est saisi par l'administrateur 8 ou généré aléatoirement par le serveur 3, par exemple par le module d'authentification administrateur 13. Il est susceptible d'être modifié dans le temps. Le Secret Station Maître est accompagné d'un numéro de version N. Le numéro de version N est incrémenté à chaque modification du Secret Station Maître. Le numéro de version N a pour valeur initiale 0. Lors d'une première connexion en mode normal réussie, le module d'authentification administrateur 13 transmet le Secret Station Maître SSM et le numéro de version N associé, contenus dans les moyens de mémorisation administrateur 16, à la machine locale 4 concernée.

Pour éviter l'utilisation du Secret Station Maître SSM sur une autre machine locale 4 par simple recopie de celui-ci d'une machine sur une autre, le module administrateur de modification de secret 14 modifie le Secret Station Maître SSM à l'aide d'une clé de modification C dépendant de la machine locale 4 concernée. Le secret obtenu est appelé Secret Station SS. Le Secret Station SS obtenu ainsi que le numéro de version N du Secret Station Maître SSM correspondant sont transmis à la machine locale 4 concernée et stockés dans les moyens de mémorisation utilisateur 17 de la machine locale 4 concernée.

La clé de modification C peut correspondre par exemple à la concaténation du Secret Station Maître et du nom de la machine locale 4 puis à la dérivation de la chaîne concaténée obtenue par une fonction de dérivation irréversible telle que par exemple la fonction connue MD5 ou SHA

Station Secret = C [Station Secret Maître]

Station Secret = [Station Secret Maître + nom de la machine locale concernée]$_{dérivation}$

Le nom de la machine locale 4 est transmis, comme il sera vu plus loin, par l'utilisateur 7.

Comme le montre la figure 1, le réseau 5 est interrompu. L'utilisateur 7 ne peut plus se connecter en mode normal. L'utilisateur 7 fait appel au procédé selon l'invention pour se connecter à la machine locale 4 concernée.

Le procédé d'authentification à distance selon l'invention consiste à :

• créer un défi D apte à être transmis par les moyens de communication 9, les moyens de communication 9 mettant l'utilisateur en relation avec l'administrateur 8 ;

• communiquer à l'administrateur 8 le défi créé D ainsi que des éléments connus de l'utilisateur à l'aide des moyens de communication 9 ;

• effectuer un calcul prédéterminé au moyen du serveur 3 pour obtenir une réponse RD fonction du défi D et/ou de données déterminées;

• transmettre à l'utilisateur 7 la réponse obtenue RD par les moyens de communication 9 ;

• effectuer un calcul à l'aide de la machine locale 4 de la même façon que le serveur 3 pour obtenir une réponse RD1 fonction du défi D et/ou de données déterminées ;

• comparer la réponse RD transmise par l'administrateur et la réponse RD1 calculée par la machine locale 4 et autoriser la connexion de l'utilisateur à la machine 4 en local en fonction du résultat de la comparaison.

Le procédé d'authentification à distance selon l'invention consiste tout d'abord à créer un défi D apte à être transmis par les moyens de communication 9. Selon la forme de réalisation illustrée, le défi est créé au moyen de la machine locale 4. Selon une forme de réalisation de l'invention, le défi se présente sous la forme d'une chaîne d'octets, et par exemple d'une chaîne de caractères. Le défi est créé au moyen du module d'authentification utilisateur 10 et plus précisément au moyen du module utilisateur de génération de défi 11 de la machine locale 4. Pour ce faire, et comme montré sur la figure 2 représentant l'écran de la machine locale 4, l'utilisateur 7 saisit sur la machine 4 un nom d'utilisateur « DUPONT » et un mot de passe « *** » représenté par des croix à l'écran. Le nom d'utilisateur et le mot de passe sont stockés temporairement dans les moyens de mémorisation utilisateur 17. L'utilisateur 7 indique à la machine locale 4 qu'il souhaite s'authentifier localement sans passer par l'authentification réseau en choisissant le mode de connexion adapté. L'utilisateur 7 choisit le mode de maintenance : il remplit la case désignée par le terme « mode » par le terme « maintenance ».

Le module utilisateur de génération de défi 11 calcule un défi D. Le défi D est, selon un exemple de forme de réalisation, une chaîne de douze caractères alphanumériques constituée de la manière suivante :

• Le premier octet représente le type de défi : il prend deux valeurs L pour limité et S pour standard correspondant chacune à un type de défi. Le défi standard est utilisé dans le cas où la machine locale 4 concernée a été connectée au moins une fois au serveur 3, le défi limité dans le cas contraire. La réponse au premier type de défi dit standard est calculée en fonction du Secret Station SS transmis par le serveur distant 3 à la machine locale 4 concernée lors de la première connexion de la machine 4 au serveur 3 au travers du réseau 5. La réponse au défi est fonction du Secret Station SS partagé entre le serveur 3 et la machine locale 4 en question. S'il n'y a pas eu une telle première authentification réseau, il existe un deuxième type de défi dit limité qui ne prend pas en compte le Secret Station. La réponse au deuxième type de défi est fonction d'une clé de sécurité fixe CC connue de la machine 4 concernée et du serveur 3 ;

- Le deuxième et troisième octets représentent le numéro de version N du Secret Station Maître contenu dans les moyens de mémorisation utilisateur 17 ;
- Les octets, du quatrième au douzième, sont des caractères alphanumériques aléatoires.

Toute autre forme de réalisation du défi est susceptible d'être utilisée. Le type de défi et le numéro de version peuvent ne pas être contenus dans le défi et être communiqués par l'utilisateur à l'aide des moyens de communication 9. Il est également possible d'introduire d'autres éléments connus de l'utilisateur 7 et/ou de la machine locale 4 dans le défi.

Le serveur 3 calcule le Secret Station SS à partir du Secret Station Maître SSM stocké dans les moyens de mémorisation administrateur 16 et le communique à la machine locale 4 concernée lors d'une première connexion en mode normal. Le Secret Station partagé entre la machine locale 4 et le serveur distant 3, oblige un passage par le serveur distant 3 pour le déblocage de toute machine locale 4. Aucune autre machine 2 que le serveur distant 3 ne pourra débloquer une machine locale 4.

Le serveur 3 conserve dans les moyens de mémorisation administrateur 16 les Secrets Station Maître de chaque version si la mise à jour simultanée de toutes les machines 4 n'est pas susceptible d'être effectuée.

Le défi D présente une forme adaptée à sa transmission de l'utilisateur 7 à l'administrateur 8 par les moyens de communication 9. Le défi est de manière avantageuse court et intelligible pour être transmis plus facilement, et de manière à diminuer le risque d'erreurs. Le défi généré est indiqué à l'utilisateur dans la case désigné par le terme « Défi » de la boîte de dialogue qui s'affiche à l'écran de la machine locale 4, comme illustré sur la figure 2.

Le procédé selon l'invention consiste ensuite à communiquer à l'administrateur 8 le défi créé D ainsi que des éléments connus de l'utilisateur 7 à l'aide des moyens de communication 9. L'utilisateur 7 contacte l'administrateur à l'aide des moyens de communication 9, lui communique le défi D généré par ladite machine ainsi que des éléments connus par lui tels que son nom d'utilisateur et le nom de la machine locale 4 concernée. L'administrateur 8 choisit le mode maintenance dans le serveur 3. La boîte de dialogue illustrée sur la figure 3 s'affiche sur l'écran du serveur 3. L'administrateur 8 saisit dans le serveur 3 le nom de l'utilisateur 7, le nom de la machine locale 4 et le défi D, communiqués par l'utilisateur et clique sur la case Appliquer (figure 3).

Le procédé selon l'invention consiste ensuite à effectuer un calcul prédéterminé au moyen du serveur distant 3 pour obtenir une réponse RD fonction du défi D et/ou de données déterminées.

Le module d'authentification administrateur 13 analyse le premier octet du défi saisi pour déterminer son type, standard ou limité. Dans le cas d'un défi standard, le module d'authentification administrateur 13 note le numéro de version du Secret Station Maître donné par le deuxième octet du défi. Dans le cas d'un défi limité, le deuxième octet n'est pas pris en considération. Le module administrateur de calcul de réponse 15 calcule une réponse RD au défi D adaptée au type de défi déterminé ; la réponse RD est apte à être transmise par les moyens de communication 9. La réponse RD au défi, de la même manière que le défi D, présente une petite taille et est intelligible. La réponse RD dépend du défi et de données déterminées telles que le nom de l'utilisateur, des informations stockées dans la base de données centrale 6, à savoir le mot de passe associé au nom d'utilisateur communiqué par l'utilisateur, et

- dans le cas d'un défi standard, le secret partagé entre le serveur 3 et la machine locale 4 (SS), secret dépendant lui-même du nom de la machine locale 4 concernée ;
- dans le cas d'un défi limité, le nom de la machine locale 4 concernée et la clé de sécurité CC fixe partagée entre le serveur 3 et la machine locale 4.

Le module administrateur de calcul de réponse 15 calcule la réponse RD au défi de la manière suivante :

Pour un défi de type standard :

Le module administrateur de calcul de réponse à un défi 15 calcule le Station Secret compte-tenu du numéro de version du Station Secret Maître donné par le défi. Le Station Secret Maître de la version correspondante est recherché dans les moyens de mémorisation administrateur 16. Le module de modification de secret 14 applique la clé C de modification au Station Secret Maître pour obtenir le Station Secret : le Station Secret Maître et le nom local de la machine locale 4 transmis par l'utilisateur sont concaténés. La chaîne de caractères ainsi obtenue est dérivée suivant l'algorithme de dérivation du module de modification de secret 14.

Le mot de passe associé au nom d'utilisateur saisi est recherché dans la base de données 6 et dérivé au moyen d'un algorithme irréversible tels que les algorithmes MD5 ou SHA pour obtenir un mot de passe codé.

La réponse à un défi de type standard est obtenue en dérivant une chaîne de caractères correspondant à la concaténation dans un ordre prédéterminé du nom de l'utilisateur et du défi tous deux transmis par l'utilisateur, du mot de passe codé et du Secret Station calculé de la manière décrite précédemment.

Selon une forme de réalisation, l'équation d'obtention de la réponse à un défi de type standard est

la suivante :

$$RD = [\text{Secret Station} + \text{nom de l'utilisateur} +$$

$$\text{mot de passe codé} + \text{Défi}$$

$$+ \text{Secret Station}]_{\text{dérivationconcaténation}}$$

Pour un défi de type limité :

Le mot de passe associé au nom d'utilisateur saisi est recherché dans la base de données 6 et dérivé au moyen d'un algorithme irréversible tels que les algorithmes MD5 ou SHA pour obtenir un mot de passe codé.

La réponse à un défi de type limité est obtenue en dérivant une chaîne de caractères correspondant à la concaténation dans un ordre prédéterminé du nom de l'utilisateur transmis par l'utilisateur, du mot de passe codé, du défi transmis par l'utilisateur, du nom local de la machine 4 transmis par l'utilisateur et d'une clé CC de sécurité fixe contenue dans les moyens de mémorisation 16 du serveur 3.

L'équation d'obtention de la réponse à un défi de type limité est par exemple la suivante :

$$RD = [\text{nom de l'utilisateur} + \text{mot de passe codé} + \text{Défi} + \text{nom de la}$$

$$\text{machine } 4 + \text{clé fixe CC}]_{\text{dérivationconcaténation}}$$

La clé de sécurité CC fixe est susceptible de présenter tout type de forme et peut par exemple être intégrée au matériel. Elle se présente par exemple sous la forme d'une chaîne d'octets intégrée aux machines 2.

La dérivation de la concaténation est réalisée par exemple au moyen d'un algorithme irréversible tels que les algorithmes MD5 ou SHA.

Toute autre forme de réponse est susceptible d'être utilisée. La réponse RD peut être calculée à partir de certains éléments seulement parmi ceux décrits précédemment, ou à partir de combinaisons particulières d'une partie ou de l'ensemble de ces éléments.

La réponse RD calculée s'affiche à l'écran du serveur 3 dans la case désignée par le terme « Réponse » (figure 3).

Le procédé consiste ensuite à transmettre à l'utilisateur 7 la réponse obtenue RD par les moyens de communication 9 ; l'administrateur 8 transmet à l'utilisateur 7 la réponse RD au défi par les moyens de communication 9.

Le procédé consiste ensuite à effectuer un calcul à l'aide de la machine locale 4 de la même façon que le serveur distant 3 pour obtenir une réponse RD1 fonction du défi D et/ou de données déterminées.

L'utilisateur 7 saisit la réponse RD au défi dans la machine locale 4 en question dans la case de la boîte de dialogue désignée par le terme « Réponse », comme le montre la figure 2 et clique sur la case OK. Le module utilisateur de calcul de réponse à un défi 12 calcule la réponse RD1 au défi D généré par le module utilisateur de génération de défi 11 de la même façon que le module administrateur de calcul de réponse à un défi 15. L'expression « de la même façon que » signifie que les calculs effectués respectivement par le module administrateur de calcul de réponse à un défi 15 et par le module utilisateur de calcul de réponse à un défi 12 sont basés sur les même principes de manière que les réponses obtenues par les calculs respectifs puissent être comparées et que le résultat de cette comparaison montre que les informations utilisées respectivement par le serveur distant 3 et par la machine locale 4 pour le calcul des réponses sont identiques.

Les informations nécessaires au calcul de ladite réponse sont disponibles :

- le nom d'utilisateur, le mot de passe et le défi sont enregistrés dans les moyens de mémorisation utilisateur 17;
- le nom de la machine locale 4 est connu de ladite machine locale 4 ;
- le Secret Station SS ou la clé de sécurité fixe CC sont stockés dans les moyens de mémorisation utilisateur 17.

Le calcul de la réponse effectué, le nom d'utilisateur, le mot de passe et le défi sont supprimés des moyens de mémorisation utilisateur 17.

Le procédé consiste ensuite à comparer la réponse RD transmise par l'administrateur et la réponse RD1 calculée par la machine locale 4 et autoriser la connexion de l'utilisateur à la machine 4 en local en fonction du résultat de la comparaison.

Le module d'authentification utilisateur 10 compare ladite réponse RD1 à la réponse RD obtenue par le serveur 3 et transmise par l'administrateur. Plusieurs types de comparaison sont susceptibles d'être utilisés suivant le calcul effectué sur le serveur 3 et la machine locale 4. Selon une forme de réalisation illustrative, le module utilisateur de calcul de réponse à un défi 12 et le module administrateur de calcul de réponse à un défi 15 utilisent un algorithme de calcul identique : le type de comparaison est alors celle de l'identité des réponses obtenus respectivement par le serveur 3 et la machine locale 4. Si la réponse RD1 obtenue par le module utilisateur de calcul de réponse 12 est identique à la réponse RD transmise par l'administrateur par les moyens de communication 9, l'utilisateur est authentifié et est autorisé à se connecter localement sur la machine 4 concernée.

Selon une forme de réalisation de l'invention, le procédé d'authentification à distance selon l'invention comprend une authentification locale additionnelle. Lorsque l'utilisateur s'est connecté en local selon le procédé selon l'invention tel que décrit précédemment, il peut souhaiter se déconnecter temporairement. Dans ce cas, il est prévu une authentification locale additionnelle pour éviter de reprendre le procédé selon l'invention dans son entier.

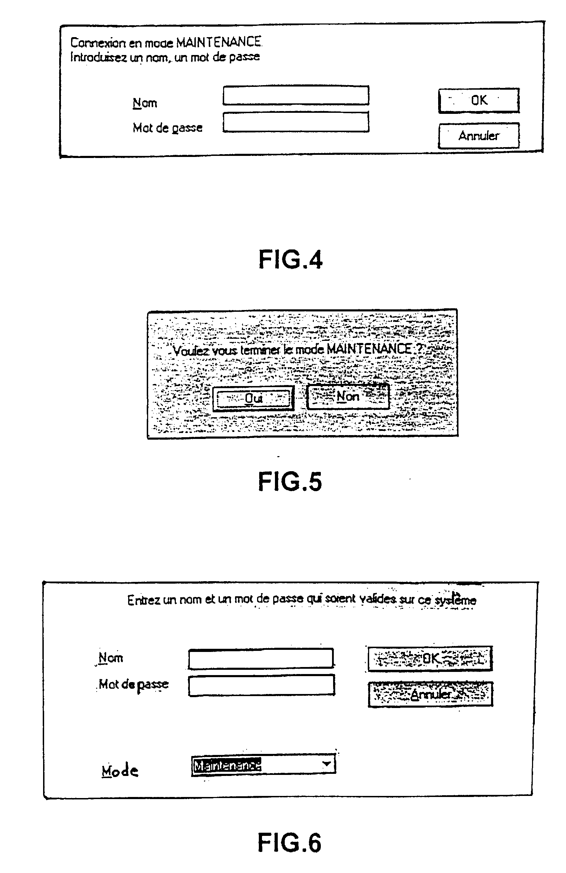

Comme montré sur le figure 4, le module d'authentification utilisateur 10 invite l'utilisateur 7 à saisir sur la machine 4 un nom d'utilisateur et un mot de passe pour le mode maintenance.

Le nom d'utilisateur en mode maintenance et le mot de passe en mode maintenance sont stockés dans les moyens de mémorisation utilisateur 17.

Le module utilisateur d'authentification 10 vérifie si le nom d'utilisateur 7 en mode maintenance existe déjà sur la machine 4, à savoir si son nom d'utilisateur en mode maintenance est stocké dans les moyens de mémorisation 17. Les moyens de mémorisation 17 peuvent se présenter sous la forme d'une base de données. Si le nom d'utilisateur en mode maintenance existe, le mot de passe en mode maintenance associé au nom d'utilisateur en mode maintenance saisi par l'utilisateur est stocké dans les moyens de mémorisation 17 : il remplace tout mot de passe existant associé au nom d'utilisateur en mode maintenance en question. Si le nom d'utilisateur en mode maintenance n'existe pas, il est créé.

En fin de session, l'utilisateur, lorsqu'il se déconnecte, peut quitter ou rester dans le mode maintenance, comme le montre le figure 5. S'il quitte le mode maintenance, il devra reprendre le procédé d'authentification à distance dans son entier. S'il reste dans le mode de maintenance, il lui suffira de saisir son nom d'utilisateur en mode maintenance et mot de passe en mode maintenance associé, comme le montre la figure 6. Le module d'authentification utilisateur 10 vérifie si le nom d'utilisateur et le mot de passe en mode maintenance sont stockés dans les moyens de mémorisation 17 d'une part, et correspondent à ceux stockés d'autre part. Dans la positive, la connexion locale est à nouveau autorisée sans avoir à reprendre le procédé d'authentification à distance selon l'invention.

Le mode maintenance peut présenter une durée limitée durant laquelle l'utilisateur peut se connecter et se déconnecter. Si l'utilisateur se déconnecte après avoir dépassé la durée autorisée, il devra s'authentifier à nouveau selon le procédé de l'invention.

La possibilité d'utiliser le procédé d'authentification à distance selon l'invention et donc le mode maintenance ainsi que la durée du mode maintenance sont configurables sur les machines locales 4. Il est à noter que l'autorisation de se connecter localement est donnée par un administrateur et pour une station donnée.

Le procédé d'authentification à distance de l'utilisateur 7 pour accéder localement à la machine locale 4 appartenant à un réseau 5 incluant le serveur distant 3 géré par l'administrateur 8 et contenant les moyens de classement 6 d'informations, est caractérisé en ce qu'il consiste à :

- créer au moyen de la machine locale 4, un défi D apte à être transmis par les moyens de communication 9, les moyens de communication 9 mettant l'utilisateur en relation avec l'administrateur 8 ;
- communiquer à l'administrateur 8 le défi créé D ainsi que des éléments connus de l'utilisateur à l'aide des moyens de communication 9 ;
- effectuer un calcul prédéterminé au moyen du serveur 3 pour obtenir une réponse RD fonction du défi D et/ou de données déterminées;
- transmettre à l'utilisateur 7 la réponse obtenue RD par les moyens de communication 9 ;
- effectuer un calcul à l'aide de la machine locale 4 de la même façon que le serveur 3 pour obtenir une réponse RD1 fonction du défi D et/ou de données déterminées ;
- comparer la réponse RD transmise par l'administrateur et la réponse RD1 calculée par la machine locale 4 et autoriser la connexion de l'utilisateur à la machine 4 en local en fonction du résultat de la comparaison.

Le calcul effectué par le serveur 3 consiste à modifier suivant un algorithme déterminé le défi D et/ou au moins une des données suivantes : au moins une information issue des moyens de classement et connue de l'utilisateur, au moins un secret partagé entre le serveur 3 et la machine locale 4, au moins un élément communiqué par l'utilisateur.

Le calcul effectué par la machine locale 4 consiste à modifier suivant un algorithme déterminé le défi D et/ou au moins une des données suivantes : au moins un secret partagé entre le serveur 3 et la machine locale 4, au moins un élément communiqué par l'utilisateur.

Le ou les secrets partagés sont saisis dans le serveur 3 et transmis à la machine locale 4 lors d'une authentification réseau réussie.

Le ou les secrets partagés sont modifiés à l'aide d'une clé de modification C dépendant de la machine locale 4, avant d'être modifiés par l'algorithme.

La clé de modification C consiste à concaténer le secret ou une combinaison des secrets se présentant sous forme d'une chaîne d'octets appelée Station Secret Maître et à dériver la chaîne d'octets obtenue par concaténation, au moyen d'un algorithme de calcul, pour obtenir une chaîne d'octets appelée Station Secret.

Le ou les secrets partagés sont accompagnés d'un numéro de version qui s'incrémente à chaque fois qu'ils sont modifiés.

Le défi est constitué d'une chaîne de caractères alphanumériques.

Le défi est composé :

- d'un premier octet représentant le type de défi, le type indiquant si une authentification réseau a été réalisée ;
- d'un deuxième et troisième octets représentant le numéro de version des informations partagées ;

- de caractères alphanumériques aléatoires du quatrième au douzième octets.

La réponse (RD ; RD1) est calculée en dérivant suivant un algorithme de calcul une chaîne de caractères composée de la concaténation dans un ordre prédéterminé du défi, de la chaîne de caractères résultant de la transformation par un algorithme de calcul du mot de passe de l'utilisateur, du Station Secret et du nom de l'utilisateur.

La réponse (RD ; RD1) peut également être calculée en dérivant suivant un algorithme de calcul une chaîne de caractères composée de la concaténation dans un ordre prédéterminé du défi, d'une clé de sécurité fixe CC stockée dans la machine 4 locale et dans le serveur 3, du nom de la machine locale 4, de la chaîne de caractères résultant de la transformation par un algorithme de calcul du mot de passe de l'utilisateur et du nom de l'utilisateur.

La connexion locale autorisée est temporaire, la durée autorisée étant configurable.

Le procédé consiste à authentifier localement l'utilisateur 7 après une déconnexion de l'utilisateur 7 authentifié à distance.

La présente invention porte également sur le système d'authentification à distance de l'utilisateur 7 pour l'accès local à la machine appelée machine locale 4, appartenant à un réseau 5 incluant un serveur distant 3 géré par l'administrateur 8 et contenant des moyens de classement 6 d'informations, caractérisé en ce qu'il comprend des moyens de communication 9 mettant l'utilisateur 7 en relation avec l'administrateur 8, en ce que chaque machine locale 4 comprend un module d'authentification utilisateur 10 comportant un module utilisateur de génération de défi 11 et un module utilisateur de calcul de réponse à un défi 12, et en ce que le serveur 3 comprend un module d'authentification administrateur 13 comportant un module administrateur de calcul de réponse à un défi 14.

**Revendications**

1.  Procédé d'authentification à distance d'un utilisateur (7) pour accéder localement à une machine locale (4) appartenant à un réseau (5) incluant un serveur distant (3) géré par un administrateur (8) et contenant des moyens de classement (6) d'informations, caractérisé en ce qu'il consiste à :

    - créer un défi (D) apte à être transmis par des moyens de communication (9), les moyens de communication (9) mettant l'utilisateur (7) en relation avec l'administrateur (8) ;
    - communiquer à l'administrateur (8) le défi créé (D) ainsi que des éléments connus de l'utilisateur à l'aide des moyens de communication (9) ;
    - effectuer un calcul prédéterminé au moyen du serveur (3) pour obtenir une réponse (RD) fonction du défi (D) et/ou de données déterminées;
    - transmettre à l'utilisateur (7) la réponse obtenue (RD) par les moyens de communication (9) ;
    - effectuer un calcul à l'aide de la machine locale (4) de la même façon que le serveur (3) pour obtenir une réponse (RD1) fonction du défi (D) et/ou de données déterminées ;
    - comparer la réponse (RD) transmise par l'administrateur et la réponse (RD1) calculée par la machine locale (4) et autoriser la connexion de l'utilisateur à la machine (4) en local en fonction du résultat de la comparaison.

2.  Procédé selon la revendication 1, caractérisé en ce que le calcul effectué par le serveur (3) consiste à modifier suivant un algorithme déterminé le défi (D) et/ou au moins une des données suivantes : au moins une information issue des moyens de classement et connue de l'utilisateur, au moins un secret partagé entre le serveur (3) et la machine locale (4), au moins un élément communiqué par l'utilisateur.

3.  Procédé selon l'une des revendications 1 ou 2, caractérisé en ce que le calcul effectué par la machine locale (4) consiste à modifier suivant un algorithme déterminé le défi (D) et/ou au moins une des données suivantes : au moins un secret partagé entre le serveur (3) et la machine locale (4), au moins un élément communiqué par l'utilisateur.

4.  Procédé selon l'une des revendications 2 ou 3, caractérisé en ce que le ou les secrets partagés sont saisis dans le serveur (3) et transmis à la machine locale (4) lors d'une authentification réseau réussie.

5.  Procédé selon l'une des revendications 2 à 4, caractérisé en ce que le ou les secrets partagés sont modifiés à l'aide d'une clé de modification ( C ) dépendant de la machine locale (4), avant d'être modifiés par l'algorithme.

6.  Procédé selon la revendication 5, caractérisé en ce que la clé de modification ( C ) consiste à concaténer le secret ou une combinaison des secrets se présentant sous forme d'une chaîne d'octets appelée Station Secret Maître et à dériver la chaîne d'octets obtenue par concaténation, au moyen d'un algorithme de calcul, pour obtenir une chaîne d'octets appelée Station Secret.

7.  Procédé selon l'une des revendications 2 à 6, caractérisé en ce que le ou les secrets partagés sont accompagnés d'un numéro de version qui s'incrémente à chaque fois que le secret est modifié.

8. Procédé selon l'une des revendications 1 à 7, caractérisé en ce que le défi est constitué d'une chaîne d'octets.

9. Procédé selon les revendications 7 et 8, caractérisé en ce que le défi est composé :

   • d'un premier octet représentant le type de défi, le type indiquant si une authentification réseau a été réalisée ;
   • d'un deuxième et troisième octets représentant le numéro de version des informations partagées ;
   • de caractères alphanumériques aléatoires du quatrième au douzième octets.

10. Procédé selon la revendication 6, caractérisé en ce que la réponse (RD ; RD1 ) est calculée en dérivant suivant un algorithme de calcul une chaîne de caractères composée de la concaténation dans un ordre prédéterminé du défi, de la chaîne de caractères résultant de la transformation par un algorithme de calcul du mot de passe de l'utilisateur, du Station Secret et du nom de l'utilisateur.

11. Procédé selon l'une des revendications 1 à 9, caractérisé en ce que la réponse (RD ; RD1) est calculée en dérivant suivant un algorithme de calcul une chaîne de caractères composée de la concaténation dans un ordre prédéterminé du défi, d'une clé de sécurité fixe CC stockée dans la machine (4) locale et dans le serveur (3), du nom de la machine locale (4), de la chaîne de caractères résultant de la transformation par un algorithme de calcul du mot de passe de l'utilisateur et du nom de l'utilisateur.

12. Procédé selon l'une des revendications 1 à 11, caractérisé en ce que la connexion locale autorisée est temporaire, la durée autorisée étant configurable.

13. Procédé selon l'une des revendications 1 à 12, caractérisé en ce qu'il consiste à authentifier localement l'utilisateur (7) après une déconnexion de l'utilisateur (7) authentifié à distance.

14. Système d'authentification à distance d'un utilisateur (7) pour l'accès local à une machine appelée machine locale (4), appartenant à un réseau (5) incluant un serveur distant (3) géré par un administrateur (8) et contenant des moyens de classement (6) d'informations, caractérisé en ce qu'il comprend des moyens de communication (9) mettant l'utilisateur (7) en relation avec l'administrateur (8), en ce que chaque machine locale (4) comprend un module d'authentification utilisateur (10) comportant un module utilisateur de génération de défi (11) et un module utilisateur de calcul de réponse à un défi (12), et en ce que le serveur (3) comprend un module d'authentification administrateur (13) comportant un module administrateur de calcul de réponse à un défi (14).

FIG.1

Veuillez communiquer le défi par téléphone à votre administrateur, puis
introduisez votre nom, mot de passe et la réponse de l'administrateur.

Nom         | D U P O N T |

Mot de passe    | ✱ ✱ ✱ |

OK

Annuler

Défi

Réponse

Mode     | Maintenance ▼ |

## FIG.2

## Maintenance

Nom d'utilisateur

Nom machine locale

Défi:

Réponse:

| Appliquer | Restaurer | Annuler | Aide |

## FIG.3

11

Connexion en mode MAINTENANCE.
Introduisez un nom, un mot de passe

Nom

Mot de passe

OK

Annuler

## FIG.4

Voulez vous terminer le mode MAINTENANCE ?

Oui

Non

## FIG.5

Entrez un nom et un mot de passe qui soient valides sur ce système

Nom

Mot de passe

OK

Annuler

Mode

Maintenance

## FIG.6

**Office européen des brevets**

## RAPPORT DE RECHERCHE EUROPEENNE

Numéro de la demande

EP 00 40 0300

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | EP 0 511 732 A (NAKANO MANABU ;MASATSUKI HIROSHI (JP)) 4 novembre 1992 (1992-11-04) <br> * colonne 2, ligne 8-50 * <br> * colonne 3, ligne 41 - colonne 4, ligne 21 * <br> * colonne 7, ligne 50 - colonne 9, ligne 15 * <br> * figure 2 * | 1-14 | H04L29/06 |
| A | EP 0 444 351 A (AMERICAN TELEPHONE & TELEGRAPH) 4 septembre 1991 (1991-09-04) <br> * abrégé * <br> * colonne 1, ligne 52 - colonne 2, ligne 6 * <br> * colonne 2, ligne 35 - colonne 3, ligne 2 * <br> * colonne 3, ligne 26 - colonne 5, ligne 11 * <br> * figure 2 * | 1-14 | |
| A | US 5 668 876 A (FALK JOHAN PER ET AL) 16 septembre 1997 (1997-09-16) <br> * colonne 1, ligne 66 - colonne 2, ligne 47 * <br> * colonne 2, ligne 66 - colonne 4, ligne 45 * <br> * colonne 5, ligne 22 - colonne 6, ligne 54 * | 1-14 | DOMAINES TECHNIQUES RECHERCHES (Int.Cl.7) <br><br> H04L <br> G06F <br> H04Q |

Le présent rapport a été établi pour toutes les revendications

| Lieu de la recherche | Date d'achèvement de la recherche | Examinateur |
|---|---|---|
| LA HAYE | 22 juin 2000 | Lázaro Lõpez, M.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 00 40 0300

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

22-06-2000

| Document brevet cité au rapport de recherche | | Date de publication | Membre(s) de la famille de brevet(s) | | Date de publication |
|---|---|---|---|---|---|
| EP 0511732 | A | 04-11-1992 | JP | 4297170 A | 21-10-1992 |
| | | | JP | 4373049 A | 25-12-1992 |
| | | | JP | 5003516 A | 08-01-1993 |
| | | | CA | 2063054 A | 27-09-1992 |
| EP 0444351 | A | 04-09-1991 | CA | 2033566 A | 29-08-1991 |
| | | | JP | 4218860 A | 10-08-1992 |
| US 5668876 | A | 16-09-1997 | AU | 692881 B | 18-06-1998 |
| | | | AU | 2688795 A | 19-01-1996 |
| | | | CA | 2193819 A | 04-01-1996 |
| | | | EP | 0766902 A | 09-04-1997 |
| | | | FI | 965161 A | 13-02-1997 |
| | | | JP | 10502195 T | 24-02-1998 |
| | | | WO | 9600485 A | 04-01-1996 |